Europäisches Patentamt

European Patent Office

Office européen des brevets

(11) Publication number: **0 306 217**

**A2**

## (12) EUROPEAN PATENT APPLICATION

(21) Application number: **88307884.2**

(22) Date of filing: **25.08.88**

(51) Int. Cl.⁴: **G03G 15/10**

(30) Priority: **31.08.87 US 91454**

(43) Date of publication of application:
**08.03.89 Bulletin 89/10**

(84) Designated Contracting States:
**CH DE FR GB IT LI**

(71) Applicant: **SAVIN CORPORATION**
**9 West Broad Street**
**Stamford, CT 06904(US)**

(72) Inventor: **Landa, Benzion**
**11910 100th Avenue**
**Edmonton Alberta(CA)**
Inventor: **Hochman, Haim**
**19 Shapira Street**
**Ramat Gan Israel 52501(IL)**
Inventor: **Schneider, Avner H.**
**41 Bialik Street**
**Nes Ziona Israel 70400(IL)**

(74) Representative: **Goodenough, Nigel et al**
**A.A. Thornton & Co. Northumberland House**
**303-306 High Holborn**
**London WC1V 7LE(GB)**

(54) Concentrated toner solution and pressurized toner dispensing mechanism.

(57) The disclosure is directed to electrophotographic copying equipment and more particularly to a high concentration toner supply and an apparatus to dispense a high concentration toner supply to a reservoir which contains a liquid developer composition. Generally, the apparatus comprises a pressurized toner supply means in fluid communication with a conduit. The conduit forms a circulation loop with the reservoir and is arranged to circulate liquid developer composition from the reservoir and through conduit. The pressurized toner supply means is selectively operable to dispense the high concentration toner supply under pressure to the conduit to mix with the liquid developer composition. In a preferred embodiment, the liquid developer flow through the conduit is a turbulent flow to facilitate the mixing of the toner concentrate and the liquid developer composition.

EP 0 306 217 A2

## CONCENTRATED TONER SOLUTION AND PRESSURIZED TONER DISPENSING MECHANISM

### Background and Summary of the Invention:

The invention is directed to electrophotographic copying equipment and more particularly to a high concentration toner and a new and improved apparatus for dispensing the toner in a preselected quantity into a reservoir containing a liquid developer solution.

In the operation of liquid electrophotographic copying equipment, a liquid developer composition or working dispersion is utilized in the process of producing hard copy on a given substrate using the information on an original document. The working dispersion may comprise, e.g., a carrier liquid such as aliphatic, isomerized hydrocarbons, toner pigment particles dispersed throughout the carrier liquid, and a charge director. The working dispersion is stored in a liquid developer reservoir mounted within the copying machine and is used in the electrophotographic copying process as required.

As is well known in the art, the toner pigment particles are dispersed in the carrier liquid at certain levels of concentration, e.g., a 1.5% weight by weight dispersion of toner particles within the carrier liquid, suitable for providing high quality reproductions. The amount of carrier liquid present in the reservoir may be monitored by a liquid level detector to measure liquid volume and the concentration of toner pigment particles dispersed in the carrier liquid may be detected by measurement of the optical density of the working dispersion. Accordingly, the preselected concentration of toner pigment dispersed in the carrier liquid is maintained by continuously monitoring the liquid level and detecting the optical density of the working dispersion in the reservoir and adding carrier liquid and/or toner concentrate to the reservoir as is necessary to maintain an adequate supply of working dispersion having the preselected concentration of toner pigment particles.

During the process of electrophotographically copying documents, each of the carrier liquid and toner pigment particles are selectively depleted from the working dispersion, depending upon the amount of dark areas to be reproduced. The extremes of copying will range from reproducing a plain white sheet to reproducing an entirely black sheet. As should be understood, the degree of depletion of toner pigment particles from the working dispersion is a function of the amount of dark area to be reproduced. For example, it has been determined that in a black image about one part solid is used per four parts liquid. Therefore, there is a 20% toner pigment particle concentration depletion of the 1.5% working dispersion within the dark areas. When the user of the copying machine requires a great many large dark area reproductions, the concentration of toner particles in the working dispersion of the reservoir will begin to decline at a rapid pace necessitating replenishment of the toner pigmented particles within the reservoir.

In many liquid electrophotographic copying machines, the toner concentrate supply for replenishing the liquid developer reservoir comprises a 10% toner pigment particle dispersion in a carrier liquid solution. A problem associated with such a 10% toner concentrate supply is that when a 20% toner concentration depletion of the toner pigment particles continues for a certain length of time due to heavy dark area reproduction requirements of the user, considerably more carrier liquid is added to the reservoir from the 10% toner concentrate supply then is being depleted in the reproduction process. If the heavy dark area reproduction continues for too long a period of time, the extra carrier liquid being delivered to the working dispersion reservoir will cause the reservoir to overflow. Most machines have a trip valve to shut down the machine prior to overflow. However, in either event, the machine becomes inoperative and the user must call a repairman to service the machine. It has been discovered that the overflow problem may be eliminated by using a high solids toner concentrate , e.g. a 20-30% solids concentration toner.

The use of toner solutions with higher concentrations of solids permits sustained reproduction of heavy dark areas since the solidsto-liquid ratio of the replenishing solution is greater than the solids-to-liquid depletion ratio. Thus, the rate of toner pigment particle replenishment will be able to keep pace with the rate of toner pigment particle depletion. It will also be appreciated that the higher concentration toner solution will reduce shipping costs since a greater image area can be developed with the same volume of toner solution.

Since the higher solids concentration toner solution of the present invention will have a higher viscosity than a similar solution with a lower solids concentration, and may even form a paste, the present invention provides an apparatus to effectively and efficiently dispense a predetermined quantity of high concentration toner supply into a reservoir containing a liquid developer composition. Generally, the invention comprises a selectively dischargeable pressurized cartridge to store the toner concentrate supply and an actuator means associated with the pressurized cartridge and operable to selectively discharge the toner concentrate supply under pressure from the pressurized cartridge for dispensing to a liquid developer composition reservoir. In accordance with one embodiment of the invention, a high concentration toner supply is stored in the selectively dischargeable pressurized cartridge which is mounted in flow communication with a tubular conduit. The pressure discharge of the cartridge is effective to force the viscous toner from the cartridge and into the conduit. The tubular conduit may be of a generally U-shaped configuration and includes inlet and outlet openings which are each submerged below the liquid level of a liquid developer composition reservoir. A fluid pump is arranged to pump the liquid developer composition from the reservoir into the inlet opening of the tubular conduit such that the liquid composition flows at a predetermined rate through the conduit and back into the reservoir via the outlet opening. Means are provided within the conduit to impart, together with the U-shaped configuration of the conduit, a high shear, turbulent liquid flow.

In accordance with a feature of the invention, a novel clamp mechanism removably mounts the pressurized cartridge by means of opposed, rotatable clamp elements which are rotated to engage and support the cartridge adjacent and in flow communication with a flow opening provided in the tubular conduit between the inlet and outlet openings. The clamp mechanism includes a control element to selectively activate the pressurized cartridge whereby the high concentration toner stored in the cartridge is dispensed under pressure from the cartridge and into the U-shaped conduit. The activation of the cartridge discharge is coordinated with the operation of the conduit fluid pump, both of which are operable in response to an optical density detector, as discussed above.

In this manner, the high concentration toner is dispensed under pressure directly into the turbulent flow of the liquid composition within the conduit to achieve a thorough mixing of the toner throughout the liquid flow. The high shear, turbulent flow characteristics imparted to the liquid fascilitate a thorough mixing process by causing the dispensed toner to be dispersed by the turbulence throughout the conduit flow. The mixture of toner and liquid composition returns to the reservoir through the outlet opening of the conduit. Pursuant to an advantage of the invention, each of the liquid flow rate, turbulent flow characteristics and pressure driven discharge rate of the toner paste may be designed and calculated to maximize the mixing effectiveness of the apparatus and obtain the preselected concentration of toner within the liquid composition contained in the reservoir, as will appear.

Accordingly, the invention provides a highly effective means for obtaining a preferred and advantageous toner concentration in a liquid developer composition. The pressurized cartridge and associated actuator facilitate the discharge of a high concentration, viscous toner concentrate for dispensing to a liquid developer reservoir of an electrophotographic copying machine. Pursuant to an advantageous embodiment of the invention, the liquid composition is caused to flow at a controlled rate under turbulent conditions through a conduit which is arranged outside the reservoir. The selective, controlled discharge of high concentration toner is then dispensed under pressure directly into the turbulent flow within the conduit to thoroughly mix the predetermined amount of dispensed toner throughout the liquid flow. The use of a high concentration toner eliminates the overflow problem and provides a more economical means to store a greater quantity of toner particles in a smaller package. To advantage, the turbulent mixing occurs within the conduit and remote from the reservoir. Moreover, the pressurized toner discharge, turbulent conduit liquid flow feature of one embodiment of the invention affords a high degree of controllability of the mixing process. The nature and rate of the pressure dispensing may be designed to obtain an ideal rate of high concentration toner discharge relative to the controlled high shear, turbulent liquid flow rate through the conduit.

Pursuant to another feature of the invention, the pressurized cartridge concept of the invention is utilized to dispense a preselected quantity of charge director such as is known in the art, e.g. soybean lecithin and the like, to the liquid developer reservoir. Charge director is typically dispensed in small quantities to the liquid developer reservoir to increase the conductivity of the working dispersion. It has been determined, for example, that the addition of one drop of a 10% solution of soybean lecithin charge director to a liquid developer reservoir containing 800 grams of 1.5% dispersion of toner pigment particles in the carrier liquid will increase the conductivity of the liquid developer composition by approximately one picomho/cm. A standard natural drop of charge director equals approximately 30 mg. which is equivalent to 40 microliter. Accordingly, it is necessary to dispense a very small amount of charge director to the reservoir to obtain the desired increase in conductivity of the liquid developer composition. Moreover, due to the nature of the charge director, the dispensing mechanism, in some cases, must not have any moving parts within the charge director fluid and must be operable such that there is never any excessive flow of charge director in addition to the desired flow.

In accordance with the invention, a charge director is dispersed in a propellant gas stored under pressure in an aerosol can. The can is mounted in a clamp mechanism of the type used to mount the toner cartridge and arranged whereby the aerosol valve element is in flow communication with a tube. The tube is arranged to extend from the aerosol can to the liquid developer reservoir such that a pressurized discharge of charge director from the aerosol can flows through the tube and into the reservoir. The control element of the clamp mechanism is either operative in conjunction with a precise timer mechanism or a flow metering device to precisely activate the valve element of the aerosol can to dispense the approximately 40 1 amount of charge director into the working dispersion reservoir. The pressurized aerosol can is relatively compact, inexpensive and provides accurate metering of the charge director discharge. Moreover, the aerosol can eliminates the presence of moving parts within the charge director as well as the undesirable flow beyond the desired small, e.g. one drop, discharge.

For a better understanding of the above, and other features and advantages of the invention, reference should be made to the detailed description of a preferred embodiment of the invention and to the accompanying drawings.

## Brief Description of the Drawings:

Fig. 1 is a side view, partially in cross section, of the toner mixing apparatus of the invention.

Fig. 1A is an exploded side view of the toner cartridge clamping device of Fig. 1.

Fig. 2 is a perspective view of the toner cartridge clamping device of Fig. 1a.

Fig. 3 is a top plan view of the toner cartridge clamping device of Fig. 2.

Fig. 4 is a side view, in cross section, of a preferred type of pressurized toner cartridge.

Fig. 5 is a side view of an aerosol can utilized to store a charge director.

## Detailed Description

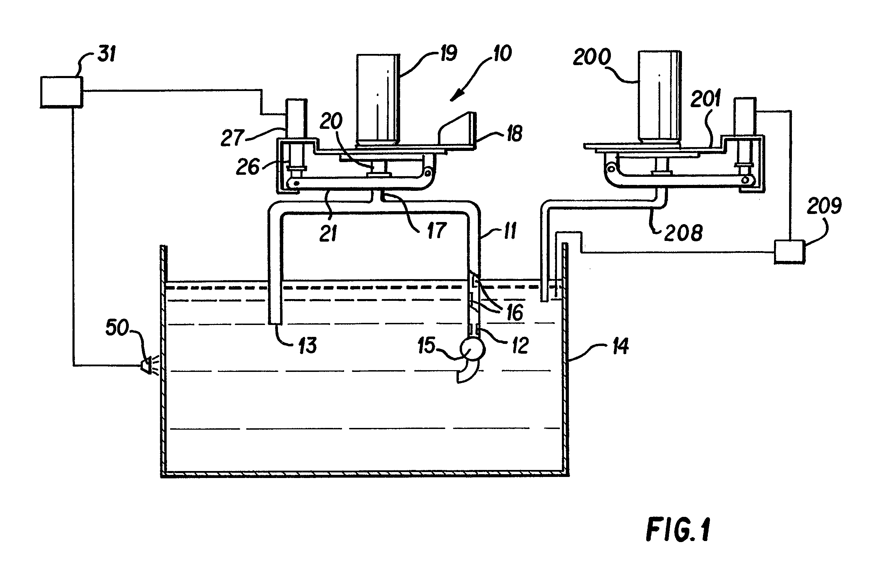

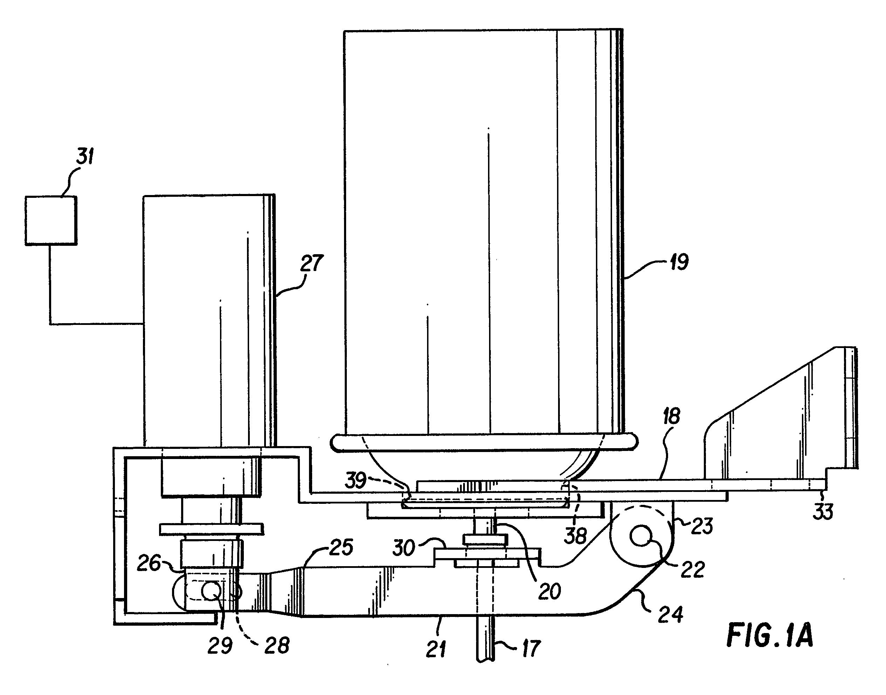

Referring now to the drawings and initially to Fig. 1, there is illustrated a toner dispensing apparatus generally indicated by the reference numeral 10. The toner dispensing apparatus 10 comprises a generally U-shaped, tubular conduit 11 including an inlet opening 12 and an outlet opening 13. The openings 12, 13 are arranged to be submerged below the liquid level of a liquid developer composition reservoir 14. The reservoir 14 is of the type typically used in an electrophotographic copying machine to store a working dispersion, as is well known in the art.

A pump 15 is operatively associated with the conduit 11 to circulate the liquid composition contained in the reservoir 14 through the conduit 11 via the inlet and outlet openings 12, 13 at a predetermined flow rate, as will be discussed in more detail below. A plurality of baffles 16 is arranged throughout the interior of the conduit 11 to impart a high shear, turbulent flow to the liquid composition as it is circulated through the conduit 11 by the pump 15.

Pursuant to the invention, a toner inlet tube 17 is provided such that toner may be dispensed into the turbulent flow of liquid composition within the conduit 11. To that end, a toner cartridge clamp device 18 is arranged adjacent the inlet tube 17 to engage and support a pressurized toner cartridge 19 adjacent and in flow communication with the inlet tube 17. In one embodiment, the cartridge 19 is a can-type cartridge having a capacity of between 125-700 ml and using a driving gas such as freon 11, freon 12, butane, propane, nitrogen or dried air to drive the high concentration toner from the cartridge. The toner may occupy between 75-500 ml of the volume of the 125-700 ml capacity can.

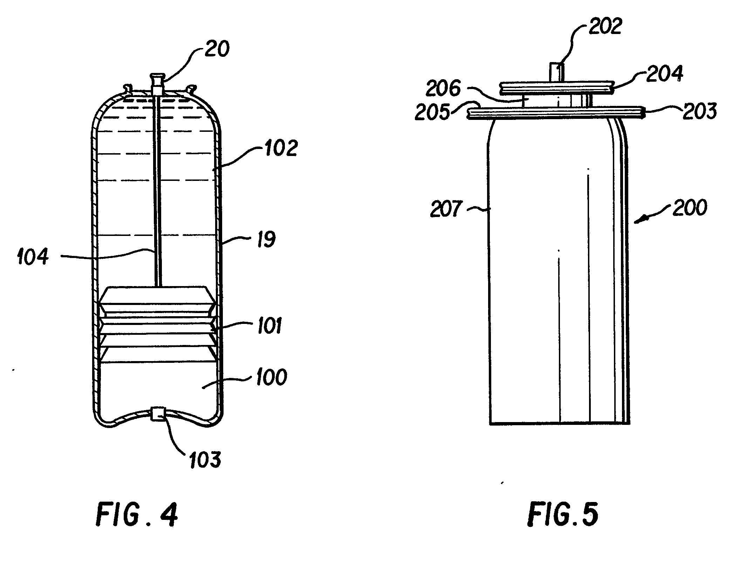

Referring now to Fig. 4, a preferred type of cartridge 19 is illustrated. The cartridge may be made from aluminum and includes a pressure chamber 100, an expandable piston 101 and a toner solution storage area 102. A removable cap 103 is provided to permit the introduction of the driving gas under pressure into the pressure chamber 100. A valve element 20 is arranged at the discharge end of the cartridge 19 such that the valve element 20 is in flow communication with the inlet tube 17 when the cartridge is engaged and supported by the clamp device 18. The valve element 20 is activateable to displace an actuation rod 104 to release the pressurized gas from the pressure chamber 100 and into the piston 101. In this manner, the piston expands axially within the cartridge 19 due to the pressure release of gas to force the viscous toner solution contained within the storage area 102 through the valve element 20 and into the inlet tube 17. Cartridges of the type discussed above and others are known to the art and are commercially available.

Referring now to Fig. 1a, the valve element 20 is engageable by an activator lever 21 rotatably mounted on the clamp 18 for selective activation to discharge the pressurized toner. The activator lever 21 has a pair of angularly disposed arms 24 each of which is rotatably mounted upon an axle 22 which is supported between two downwardly extending flange members 23. The arms 24 are each integral with two side members 25, respectively. The side members 25 extend generally parallel to one another for a certain length, then converge toward one another and again extend in a parallel relation such that the two side members 25 are arranged closely adjacent a longitudinally movable actuator 26 of a solenoid 27. Each of the side members 25 includes a slot opening 28 adjacent the actuator 26 to receive a pin 29 extending through the actuator 26 whereby operation of the solenoid 27 displaces the actuator 26 longitudinally to thereby rotate the activator lever 21 about the axle 22.

A platform-like member 30 is mounted between the side members 25 at a position directly below the valve element 20. The platform-like member 30 is formed to include an opening 21 to permit the positioning of the inlet tube 17 in fluid communication with the valve element 20 when the cartridge 19 is engaged and supported by the clamp device 18. The member 30 is also arranged to contact the valve element 20 upon rotation of the activator lever 21 about the axle 22 to provide the selective activation engagement between the activator lever 21 and the valve element 20. The solenoid 27 is electrically connected to an electrical control and power supply 31 for energization of the solenoid 27. The electrical control and power supply 31 may be operative in response to an optical sensor 50 as discussed above and as is known in the art.

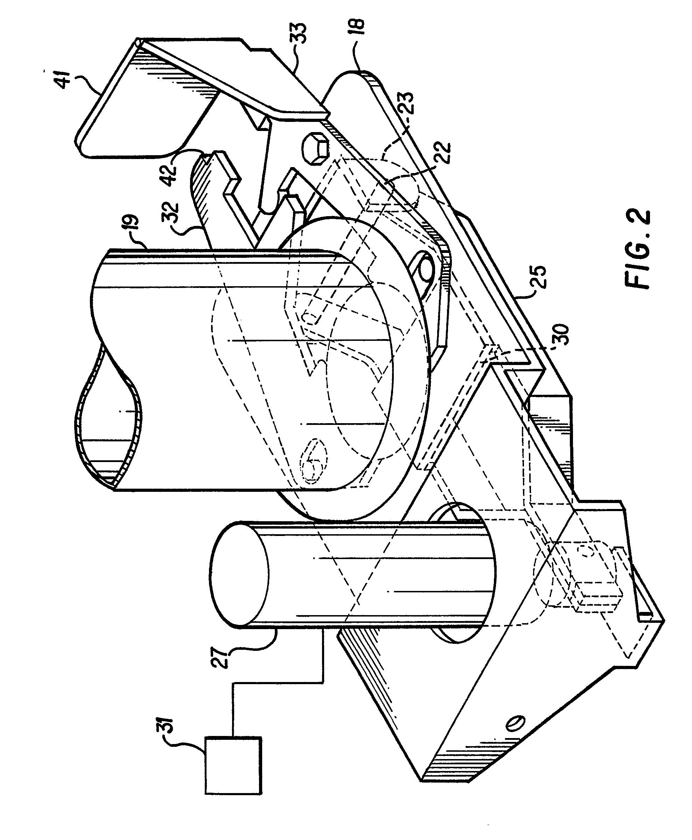

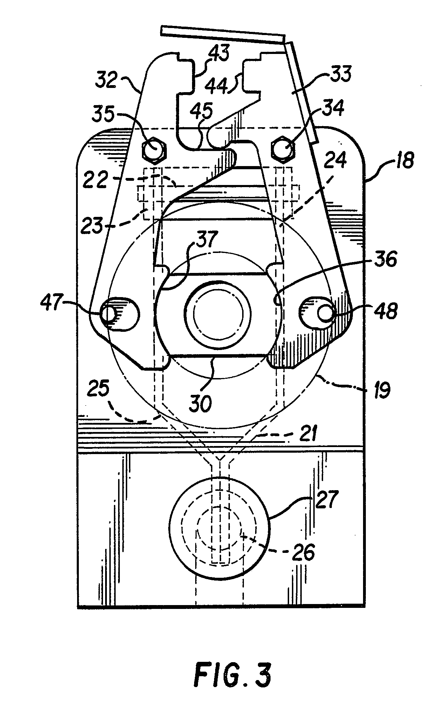

Pursuant to another feature of the invention illustrated in FIGS. 2 and 3, the pressurized toner cartridge 19 is engaged and supported by a pair of opposed, rotatable clamp elements 32, 33, which are rotatably supported on the clamp device 18 at pivot points 34, 35, respectively. Each of the clamp elements 32, 33 includes a generally concave cartridge grip surface element 36, 37. The elements 36, 37 are arranged to grip the cartridge at the crimp 38 of the valve element 20 to the cartridge 19 upon rotation of each of the clamp elements 32, 33 toward the cartridge 19, as illustrated in Fig. 3. The crimp 38 is generally more uniform than the crimp of the top to the cartridge and therefore provides an advantageous gripping surface. The clamp elements 32, 33 include opposed spring supports 43, 44 to support a coil spring (not illustrated) and contacting, cooperating projections 45, 46 to facilitate the rotation of the clamp elements 32, 33 required to permit the insertion of the crimp 38 between the grip surfaces 36, 37 and the gripping engagement illustrated in Fig. 3. Moreover, stops 47, 48, are provided, to limit the pivoting movement by the clamp elements 32, 33.

An opening 39 is formed in the clamp device 18 and positioned between the grip surface elements 36, 37. Accordingly, a pressurized cartridge 19 containing toner may be inserted through the opening 39 such that the valve element 20 is placed in flow communication with the inlet tube 17. The clamp elements 32, 33 are then rotated to bring the grip surfaces 36, 37 into engagement with the crimp 38. The clamp element 33 is provided with an upwardly extending flange 40 to rotatably support a locking member 41. The locking member 41 is rotatable into engagement with a seat portion 42 formed on the clamp element 32 to hold the clamp elements 32, 33 in the crimp 38 engaging position and thereby support the cartridge 19 on the toner dispensing apparatus 10.

In the operation of the toner dispensing apparatus 10, engerization of the solenoid 27 by the power supply 31 is coordinated with the activation of the pump 15 such that the turbulent liquid flow through the conduit 11 commences prior to the engerization of the solenoid 27. The activation of the pump 15 and engerization of the solenoid 27 may be controlled by a monitoring means including an optical sensor 50, as is well known in the art. Upon engerization of the soloniod 27, the actuator 26 is displaced longitudinally upward to rotate the activator lever 21 about the axle 22 via the pin 29-slot 28 connection into activating engagement with the valve element 20. In this manner, the high concentration viscous toner is discharged due to gas pressure activation of the piston 101 from the cartridge 19 through the valve element 20 and into the inlet tube 17. The pressure discharged, high concentration toner will then enter the conduit 11 from the inlet tube 17 to mix with the turbulent, high shear flow of liquid composition as explained above. In accordance with a preferred embodiment of the invention, the conduit is approximately one foot in length and a half inch in diameter. The pump 15 is operated to provide a 6 1/min flow rate of liquid composition through the conduit 11.

Referring once again to Fig. 1, a second pressure cartridge comprises an aerosol can 200 containing a supply of charge director dispersed in a suitable aerosol propellant. The can 200 is mounted in a clamp device 201 which is generally of the same construction as the clamp device 18 used to mount the toner cartridge 19. As illustrated in Fig. 5, the can 200 is a conventional aerosol can including a discharge valve 202 and crimps 203, 204 to fasten the top 205 and valve support 206 respectively to the cylindrical body 207 of the can 200. The clamp device 200 is arranged to grip the crimp 204 such that the can 200 is securely mounted in the device 201. When mounted, the discharge valve 202 is in fluid communication with a tube 208 which extends from the valve 202 to the liquid developer composition reservoir 14. The clamp device 201 is operative to selectively activate the discharge valve 202 for a precise, preselected period of time such that a predetermined amount of charge director, e.g. 40 microliters, or more is dispensed to the reservoir 14, when and as desired. In one preferred embodiment, the clamp drive 201 is selectively activated by a conductivity sensor and electrical controller 209 which monitors the conductivity of the working dispersion to determine when charge director is to be added to the reservoir.

The high concentration toner solution of the present invention comprises greater than 15% toner solids and preferably between 20% and 30% toner solids. The concentrated toner solution can be initially formed using otherwise conventional methods which are modified only as is necessary to increase the percentage of solids. Alternatively, a typical 10% solids toner solution can be filtered, e.g. on a polypropylene cloth, until the desired solids concentration is achieved.

It will be appreciated that the viscosity of the toner solution will increase as the percentage of solids is increased. The actual viscosity of the solution will be dependent on several factors such as the specific percentage of solids, the temperature of the solution and the pigment-to-resin ratio . A typical toner concentrate of the present invention having about 27% solids has been found to have a viscosity of about 40,000-50,000 centipoise at room temperature.

While the dispensing apparatus described above has been found to be especially suitable for dispensing the concentrated toner solution described herein, it will be appreciated that other forms of dispensers which are capable of dispensing viscous fluids may also be employed.

The invention provides a highly effective means to dispense accurate amounts of an advantageous high concentration toner to a working dispersion. The pressurized discharge is effective in efficiently dispensing a viscous toner supply and the turbulent working dispersion flow assures a thorough mixing of the dispensed high concentration toner with the working dispersion. The basic teaching of the invention is also advantageously applicable to a means to accurately dispense very small quantities of charge director to the liquid developer reservoir.

## Claims

1. Dispensing apparatus for an electrophotographic copying machine, the apparatus being operable to dispense a material, for example a toner concentrate having a preselected concentration of toner pigment particles and/or a charge director to a reservoir that contains a liquid developer composition, which apparatus comprises:

(a) a selectively dischargeable, pressurized supply means containing said material; and

(b) an actuator means associated with said selectively dischargeable, pressurized supply means and operable to selectively discharge said material under pressure from said selectively dischargeable, pressurized supply means to thereby dispense said material under pressure into said liquid developer composition reservoir.

2. Dispensing apparatus according to claim 1, further comprising: conduit means forming a closed fluid circulation loop with said liquid developer reservoir; and means to circulate said liquid developer composition through said fluid circulation loop at a preselected rate of circulation, said pressurized supply means being in selective fluid communication with said conduit means, and said actuator means being operable to selectively discharge material under pressure from said supply means to said conduit means to mix said material and said liquid developer composition within said conduit means.

3. Dispensing apparatus according to claim 2, wherein said conduit means including means to cause a turbulent, high shear fluid circulation through said conduit means, said conduit preferably being of a generally U-shaped configuration; and said means to cause a turbulent, high shear circulation preferably comprising baffles.

4. Dispensing apparatus according to any preceding claim wherein said selectively dischargeable, pressurized supply means comprises a cylindrical, pressurized cartridge, said cartridge preferably including a toner supply compartment, a pressurized gas compartment and an expandable piston means in selective fluid communication with said pressurized gas compartment and arranged between said toner supply compartment and said pressurized gas compartment.

5. Dispensing apparatus according to claim 4 including a valve element selectively operable to cause a pressurized gas discharge from said pressurized gas compartment to said expandable piston to expand said piston into said toner supply compartment to dispense said toner having a preselected concentration of toner pigment particles under pressure through said valve element, said valve element being in fluid communication with said conduit means and operatively associated with said actuator means.

6. Dispensing apparatus according to claim 4 or claim 5 further including by a clamp mechanism arranged to removably mount said cylindrical, pressurized cartridge in selective fluid communication with said conduit means and adjacent said actuator means; said clamp mechanism preferably comprising: a pair of opposed, rotatable clamp elements each including a gripping surface arranged to engage said cylindrical pressurized cartridge, said clamp elements being arranged and configured relative to one another so as to be co-operatively rotatable into engagement with said cylindrical, pressurized cartridge whereby said cylindrical, pressurized cartridge is engaged by and gripped between said gripping surfaces; and locking means to lock said clamp elements in a fixed position with said cylindrical, pressurized cartridge grippingly engaged by said gripping surfaces.

7. Dispensing apparatus according to claim 6, wherein said cylindrical, pressurized cartridge includes a crimp portion adjacent one end thereof; and said gripping surfaces are arranged to engage and grip said cylindrical, pressurized cartridge about said crimp portion.

8. Dispensing apparatus according to any preceding claim wherein said selectively dischargeable, pressurized supply means comprises an aerosol can; and further including monitoring means associated with said actuator to control discharge of material from said aerosol can.

9. Dispensing apparatus according to claim 8, wherein said monitoring means includes a conductivity sensor to monitor the conductivity of the liquid developer composition within the reservoir.

10. Dispensing apparatus according to any preceding claim comprising monitoring means associated with said actuator to control the discharge of material, said monitoring means preferably including an optical sensor to monitor the optical density of the liquid developer composition within the reservoir.

11. Dispensing apparatus according to any preceding claim wherein the material comprises 15%-35% concentration of toner pigment particles in carrier liquid.

12. Dispensing apparatus according to any of claims 6-11 wherein said cylindrical, pressurized cartridge includes a discharge valve means; said actuator means comprising a lever element rotatably mounted on said clamp mechanism and rotatable to operatively engage said discharge valve means; and an electro-mechanical control means for example comprising a solenoid is mechanically connected to said lever element and operative to rotate said lever element to operatively engage said discharge valve.

13. Means for replenishing toner solids to a liquid developer reservoir in an electrophotographic copying machine comprising: a toner supply solution containing at least 15% and preferably 20%-30% toner solids, and means for dispensing said toner supply solution to said liquid developer reservoir.

14. A method of replenishing toner solids to a liquid developer reservoir in an electrophotographic copying machine comprising: supplying a toner solution having at least 15% and preferably 20%-30% toner solids to said liquid developer reservoir.

15. A toner supply solution for replenishing the toner solids to a liquid developer reservoir in an electrophotographic copying machine comprising at least 15% and preferably 20%-30% toner solids.

FIG.1

FIG.1A

FIG. 2

FIG. 3

FIG. 4

FIG.5

EP 0 306 217 A2